# EUROPEAN PATENT SPECIFICATION

(11) **EP 4 280 856 B1**
(45) Date of publication and mention of the grant of the patent: **18.03.2026**
(21) Application number: 22708635.2
(22) Date of filing: 25.01.2022
(51) Int. Cl.: A01C 7/04

(54) **SINGULATING DEVICE FOR AGRICULTURAL IMPLEMENT AND METHOD OF SINGULATING GRANULAR MATERIAL**
VEREINZELUNGSVORRICHTUNG FÜR LANDWIRTSCHAFTLICHES ARBEITSGERÄT UND VERFAHREN ZUM VEREINZELN VON KÖRNIGEM MATERIAL
DISPOSITIF D'INDIVIDUALISATION POUR OUTIL AGRICOLE ET PROCÉDÉ D'INDIVIDUALISATION DE MATÉRIAU GRANULAIRE

(30) Priority: 25.01.2021 SE 2150079
(43) Date of publication of application: 29.11.2023
(73) Proprietor: Väderstad Holding AB, 590 21 Väderstad (SE)
(72) Inventor: GILSTRING, Gert, 592 92 Vadstena (SE); THYLÉN, Lars, 582 21 Linköping (SE)
(74) Representative: AWA Sweden AB
(86) International application number: PCT/SE2022/050068
(87) International publication number: WO 2022/159027

(56) References cited:
- DE-A1- 102009 043 881
- US-A- 4 239 126

## Description

### Technical Field

This document relates to an agricultural implement for distribution of granular material, such as seed, fertilizer and/or pesticides, to the ground on which the agricultural implement is travelling. More particularly, the document relates to a singulating device, comprising a singulating part, such as a singulating disc or a singulating drum, and a clearing wheel interacting with the singulating part for combined local breaking of the difference in pressure and clearing of the singulating part.

Furthermore, the document relates to a method of singulating granular material in the agricultural implement.

### Background

A singulator is used in the plurality of agricultural implements in order to feed granular material, such as seed, in such a way that a controlled flow of the granular material is provided, and in particular a flow that provides feeding of a predetermined number of seeds per time unit.

Singulators are known from, for example, WO10059101A1, WO12121658A1 and WO13180619A1.

A singulator can comprise a casing, which includes a rotatable singulating part, which has a plurality of through-holes, which are slightly smaller than the granules to be singulated. At the lower portion of the singulating part, there is, on one of its sides, a space for a number of granules. A difference in pressure is provided across both sides of the singulating part, so that the granules can be sucked against the holes of the singulating part, when this rotates through the space.

At a point higher up, the difference in pressure is broken so that the granule detaches from the hole and is received in an outlet from which the granule is guided to, for example, a furrow-opener or another metering device.

However, some granules can get stuck in the holes and be stuck so hard that they do not detach when the difference in pressure is broken. Such granules can be damaged, by being "cut off", when they later pass the outlet which can bear against the singulating part. Accordingly, the holes of the singulating part can become blocked, which leads to interruption in the feeding and thus greater, undesired distances between planted seeds. The remaining part of the seeds which are "cut off" can accumulate in the space and be captured by the singulating part and be fed out. Consequently, seeds that have been cut off and fed out may not be able to grow.

A number of known singulators use a first device, which can have the form of a flexibly sealing wheel or a sealing edge in order to break the difference in pressure across the singulating part to make the seeds fall down into the outlet.

A second device can possibly be used to clear away granules which are stuck in the holes of the singulating part.

The latter device can have the form of a wheel with spikes protruding into the holes of the singulating part, and which can be arranged after the outlet.

By clearing the singulating part after the outlet, damaged granules will remain in the singulator and thus the proportion of granules in the space which are likely to block the holes in the singulating part will increase.

US20200337220A1 and DE102009043881A show singulators with a singulating disc and a singulating drum, which have a combined sealing and clearing wheel.

In order for the type of singulating described above to function, it is important that the difference in pressure across the singulating part is broken to a sufficient extent at a well-defined time and during a sufficiently long period, for the seed to detach and be passed on to a seed outlet, and not to be sucked back into the hole of the singulating part.

A singulator on an agricultural implement which is driven across a field is, however, subject to extensive vibrations. In addition, there is dust and small particles which detach from, or are transported with, the seed inside the singulator.

This means that the principles shown in US20200337220A1 and DE102009043881A are difficult to achieve in practice.

Therefore, there is a need for an improved sealing and clearing device.

### Summary

One object is thus to provide an improved combined sealing and clearing device. Specific objects include providing a combined sealing and clearing device which is more robust and less sensitive to interference, such as vibrations and dust or small particles.

The invention is defined by the attached independent patent claims. Embodiments are set forth in the dependent claims, in the description that follows and in the accompanying drawings.

According to a first aspect, a singulating device for singulating granular material is provided, comprising a singulating part, which has a plurality of through-holes for receiving single granules from said granular material using a difference in pressure between opposite sides of the singulating part, a rotatably arranged clearing wheel, which has a plurality of radially protruding clearing protrusions and a seal surrounding the clearing protrusions, wherein the clearing protrusions are arranged at a mutual distance corresponding to a mutual distance between said through-holes, wherein the clearing wheel comprises a hub of a first material, and wherein a seal is made from a second material, which is softer than the first material. The seal is radially deformable, across a length in the radial direction of the clearing wheel corresponding to approximately 1-20% of a maximum radius of the clearing wheel including the seal, preferably 1-3%, 3-5%, 5-7%, 7-9%, 9-11%, 11-13% or 13-15% of said radius, with a spring stiffness corresponding to less than approximately 10 N/mm, preferably less than approximately 7 N/mm.

The spring stiffness can specifically be 0.5-10 N/mm, preferably 0.6-2 N/mm, 2-4 N/mm, 4-6 N/mm, 6-8 N/mm or 8-10 N/mm.

The concept "a radius of the clearing wheel including the seal" means that the clearing protrusions, which can protrude radially outside the seal, do not form a part of the relevant radius, since the clearing protrusions can be fixed or moveable relative to the hub.

The indicated spring stiffness defines a very soft spring. Consequently, a soft seal is provided, which, at a low force, can be deformed sufficiently for the seal to also function in the event of a small amount of dust or other small particles.

By allowing deformation at a low force, a biasing force between the singulating part and the clearing wheel can be kept low, wherein issues with deflection of the singulating part and/or friction between the singulating part and seals in the singulating device can be reduced. Therefore, friction loss is reduced and consequently, the need for thrust.

The seal, viewed in a sectional plane across the radial direction, can comprise a sealing body which is made from the second material and an expansion space, in which a deformed part of the sealing body is receivable.

An expansion space is a space in which a deformed part of the sealing body can be received.

Preferably, this expansion space is located within the periphery of the seal, viewed in a plane perpendicular to its direction of compression.

The expansion space can be surrounded by the sealing body.

Thus, the sealing body can be deformed inward, which facilitates deformation of the sealing body when a plurality of seals exist adjacent each other.

The hub can substantially be undeformable and the radial compression of the seal can be limited by the hub.

"Undeformable" means that the hub has negligible radial change of form under the forces that the clearing wheel is subjected to during normal use.

The seal can principally be arranged substantially outside the hub in the radial direction.

The clearing wheel and the singulating part can be biased to each other, so that when the seal abuts against the singulating part, it deforms approximately 1-15% of said maximum radius of the clearing wheel including the seal, preferably at least approximately 1-3%, approximately 3-6%, approximately 6-9%, approximately 9-12% or approximately 12-15%.

The biasing can be achieved by the seal alone. Alternatively, an additional spring can be used in order to achieve the biasing.

The first material can be metal or plastic.

The second material can be a rubber elastic material, such as rubber, thermoplastic elastomer, polyurethane or silicone.

The seal can form a container surrounding the clearing protrusion, which is radially outwardly open and which has a circumferential wall having an inner surface which faces the clearing protrusion.

In such embodiments, the container can be the expansion space.

The wall can have a wall thickness and the clearing protrusion can have a maximum cross-sectional dimension, wherein said wall thickness and said maximum cross-sectional dimension, at the same radial distance from the axis of rotation of the clearing wheel, are such that the cross-sectional dimension is at least twice the wall thickness, wherein the wall thickness is preferably radial outwardly declining.

The inner wall can have a radial extension amounting to 5-35% of the radius, preferably approximately 5-10%, approximately 10-15%, approximately 15-20%, approximately 20-25%, approximately 25-30% or approximately 30-35%.

The clearing protrusions can be made of the same material as the hub, and preferably made in one piece with the hub.

The clearing wheel can comprise a gap radially extending between the hub and the seal, wherein the radial extension of the gap defines a maximum radial compression for the clearing wheel including the seal.

In such embodiments, the gap forms the expansion space.

The radial extension of the gap can be 5-15% of a maximum radius of the clearing wheel including the seal.

The hub can comprise a substantially radially outwardly facing limiting surface, radially inside the clearing protrusions, so that a displacement of the clearing protrusions in a substantially radial direction is limited by the limiting surface.

By limiting the radial displacement of the clearing protrusions, it is possible to ensure that a sufficiently large force is applied on any remaining material in the through-holes.

The limiting surface can have an axial extension which is 30-90% of the greatest axial extension of the seal, preferably 50-90% or 60-80%.

The clearing protrusion can have a radially inwardly facing stop surface, which has an axial extension which is 110-300% of an externally visible part of the greatest axial extension of the clearing protrusion, preferably 150-200%.

The limiting surface, viewed in one plane containing a geometric axis of rotation for the clearing wheel, can have an acute angle relative to the geometric axis of rotation, wherein the angle preferably can be 5-35 degrees.

The seal can be made as a shell with a radially outwardly facing surface which is convex, viewed in one plane containing the geometric axis of rotation.

The clearing protrusions can be made from a different material than the seal, fixed relative to the seal and radially moveable with the seal.

The clearing protrusions can be made integrated with the seal, preferably made in one piece with the seal.

The clearing protrusions can radially overlap a part of the hub and are guided by the hub in at least one direction, wherein said direction preferably is parallel to an axis of rotation for the clearing wheel.

A part of said clearing protrusion extending inward from the seal can interact with a blind hole formed in the hub, so that the clearing protrusion is moveable in substantially one direction relative to the hub.

A part of said clearing protrusion extending inward from the seal can interact with a bottom groove formed in the hub, so that the clearing protrusion is moveable in substantially one plane relative to the hub.

The singulating device can further comprise a casing, which encloses the singulating part and the clearing wheel, an inlet for the granular material, an outlet for singulated granular material, and a pressure source, configured to provide a difference in pressure across the singulating part.

The pressure source can preferably be a source of pressure which is higher than the ambient atmospheric pressure.

The singulating part can be in the form of a singulating disc, which is rotatable about an axis which is perpendicular +/- 40 degrees, preferably +/-30 degrees or +/- 20 degrees to an axis about which the clearing wheel is rotatable. Specifically, the singulating disc can be rotatable about an axis which is perpendicular to the axis of rotation of the clearing wheel.

The clearing wheel can have at least two circumferential rows of clearing protrusions, wherein said rows are displaced relative to each other in an axial direction of the clearing wheel.

According to a second aspect, an agricultural implement for distribution of granular material to the ground on which the agricultural implement is travelling is provided, comprising a plurality of row units, wherein at least some of the row units have a singulating device as described above, which is configured to provide singulated seed in a row unit associated with the singulating device.

The singulating part can also be in the form of a singulating drum, which is rotatable about an axis which is parallel +/- 20 degrees, preferably +/- 10 degrees or +/- 1 degree, to an axis about which the clearing wheel is rotatable. Specifically, the singulating drum can be rotatable about an axis which is parallel to the axis of rotation of the clearing wheel.

According to a third aspect, an agricultural implement for distribution of granular material to the ground on which the agricultural implement is travelling is provided, comprising a plurality of seed outlets, wherein the agricultural implement has at least one singulating device as described above, which is configured to supply at least two of the seed outlets with singulated seed.

According to a fourth aspect, a method of singulating granular material in an agricultural implement is provided, comprising providing a singulator comprising a singulating part, which has a plurality of through-holes for receiving single granules from said granular material, providing a difference in pressure between opposite sides of the singulating part, rotating the singulating part through an amount of said granular material, so that said granules are sucked against said through-holes and passed from said amount to an outlet, providing a rotatable clearing wheel, which has a plurality of radially protruding clearing protrusions and a seal surrounding the clearing protrusions, at the outlet, using the clearing wheel, simultaneously breaking said difference in pressure using the seal and clearing said through-holes using the clearing protrusions, so that granules, which are held at said through-holes, detach and so that any remaining material is removed from said through-holes. The method comprises bringing the seal to the singulating part with a force of approximately 0.5-10 N, preferably approximately 1-7 N, and when said difference in pressure is broken, the seal being deformed radially corresponding to approximately 1-20% of a maximum radius of the clearing wheel including the seal, preferably 1-3%, 3-5%, 5-7%, 7-9%, 9-11%, 11-13% or 13-15% of said radius.

Specifically, the force can be approximately 1-2 N, approximately 2-4 N, approximately 4-6 N, approximately 6-8 N or approximately 8-10 N.

Said difference in pressure can be provided as a pressure above the ambient atmospheric pressure on one side of the singulating part, which said granules are contacting.

### Brief description of the drawings

Figs. 1a-1b show a schematic top view and a schematic side view of an agricultural implement 1 coupled to a tractor vehicle 2.
Fig. 2 shows a perspective view of a singulator 140.
Figs. 3a-3b show cross sections of the singulator 140.
Figs. 4a-4c show a first embodiment of a clearing wheel 1410.
Figs. 5a-5c show the clearing wheel 1410 and a singulating disc 1420.
Figs. 6a-6b show a second embodiment of a singulator 140.
Figs. 7a-7d show a second embodiment of a clearing wheel 1411.
Figs. 8a-8c show the clearing wheel 1411 according to the second embodiment.
Figs. 9a-9b show a further variant of the clearing wheel 1412 according to the second embodiment.
Figs. 10a-10b show a further variant of the clearing wheel 1413 according to the second embodiment.
Figs. 11a-11b show a further variant of the clearing wheel 1414 according to the second embodiment.
Figs. 12a-12b show a third embodiment of a singulator 140.
Fig. 13 shows a further variant of the clearing wheel 1416 according to the second embodiment.
Fig. 14 shows a further variant of the clearing wheel 1417 according to the second embodiment.

### Detailed description

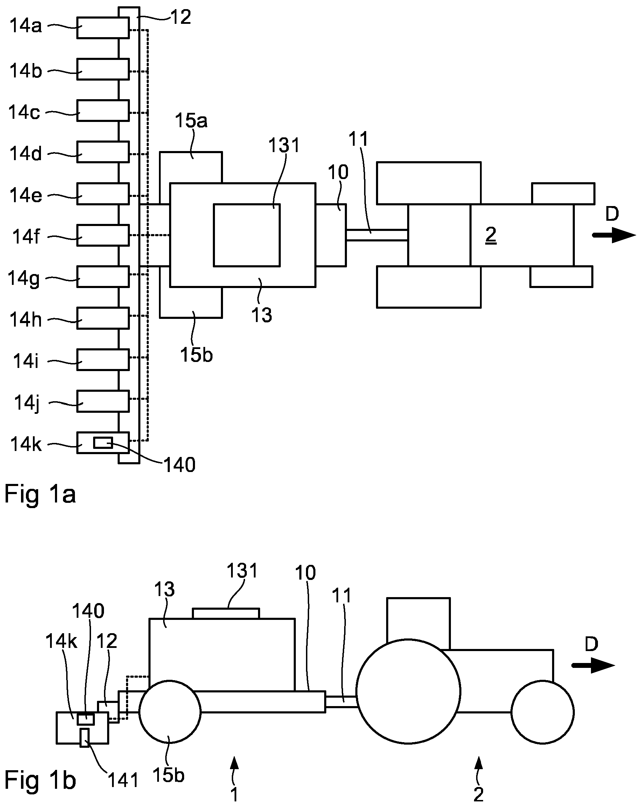

Figs. 1a-1b schematically show, viewed from above, and from the side, an agricultural implement 1, which is coupled to a tractor vehicle 2, such as a tractor and arranged in a direction of travel D. In the example shown, the agricultural implement is in the form of a seed drill with a central container.

It will be appreciated that a seed drill can have two or more such containers.

It will further be appreciated that the seed drill can be of an arbitrary type, such as a volumetrically feeding seed drill or a precision seed drill, which can have, but does not have to have, a central container which feeds seed to a plurality of row units.

The seed drill can feed seed directly from a container to the respective furrow-opener. Alternatively, the seed drill can feed seed to a plurality of furrow-openers or row units via a distributor, which can distribute an airflow mixed with material to a plurality of furrow-openers or row units.

In the example shown, the agricultural implement has a main frame 10, a towing device 11, a cross frame 12, a container 13, which is carried by the main frame 10, wherein the container has an opening 131. The agricultural implement can comprise a plurality of row units 14a-14k, which are carried by the cross frame 12 and at least one wheel 15a, 15b and/or one or more rolling ground supports of another type, such as rollers or roller wheels.

The opening 131 can be provided with a stopper, such as a cap or a tarpaulin.

Each of the row units 14a-14k is provided with a singulator 140 for singulating seeds, and a metering device 141, as a non-limiting example, can have the form of a furrow-opener or an arrangement comprising one or more of a seed furrow-opener, a press wheel, a depth-regulating wheel and a seed furrow-sealer.

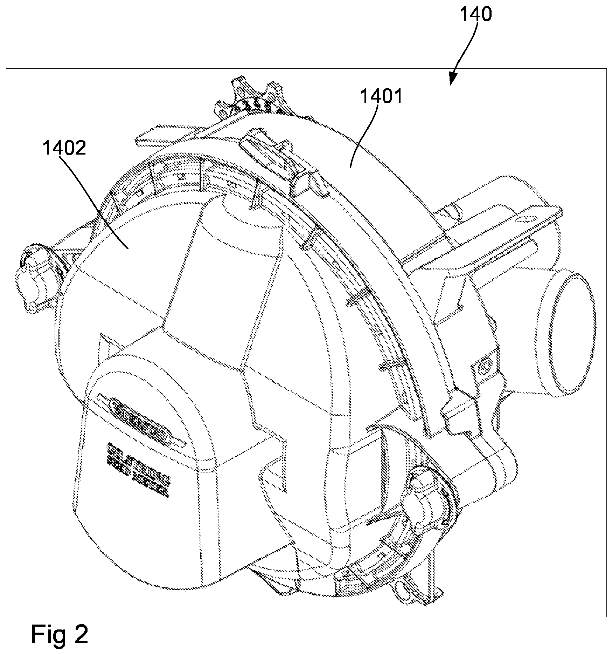

The examples shown with reference to Figs. 2-11b firstly relate to singulators which use a singulating disc, which can be substantially circular and which rotates in the plane of the disc.

Fig. 2 shows a singulator 140, comprising a casing which consists of a base casing 1401 and a front cover 1402. The singulator has a singulator inlet 1405 and a singulator outlet 1406. The base casing 1401 can be fitted to a frame of the row unit 14a-14k and the front cover 1402 can be releasably fitted to the base casing 1401 so that the casing encloses a singulating space.

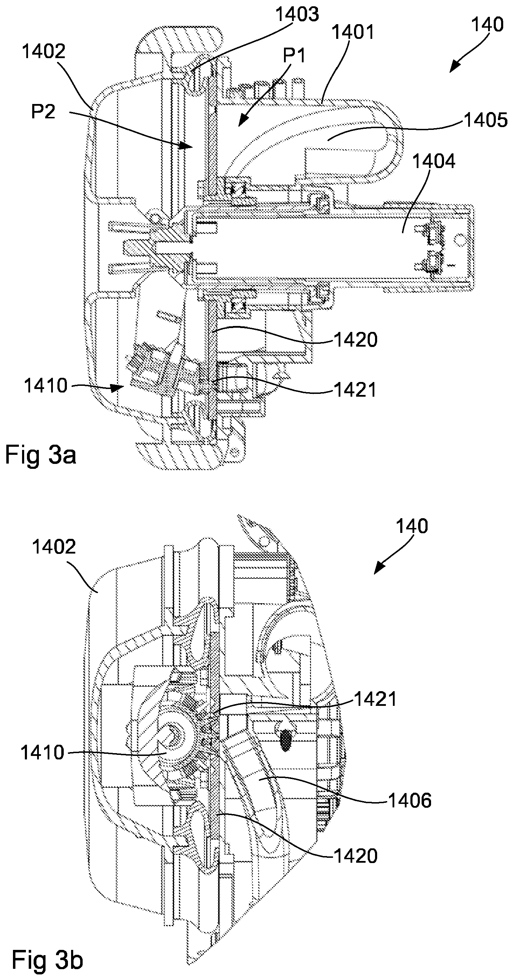

Fig. 3a shows the singulator 140 viewed in cross section in a horizontal plane and Fig. 3b shows the singulator 140 viewed in cross section in a vertical plane.

As can be seen in Fig. 3a and 3b, a sealing strip 1403 is arranged to seal the seam between the base part 1401 and the front cover 1402. The sealing strip 1403 also seals to a low-pressure side P2 of the singulating disc 1420.

The singulating disc 1420 is rotatably arranged in the singulating space and connected to a drive unit 1404, which can be in the form of an electric motor. Seed and pressurized air, i.e. air with pressure exceeding an ambient atmospheric pressure, is fed to a high-pressure side P1 of the singulating disc. Consequently, the difference in pressure across the singulating disc 1420 is provided, wherein seed existing on the high-pressure side P1 can be sucked into through-holes 1421 in the singulating disc, by the through-holes 1421 having an opening which is slightly smaller than the type of granules to be fed, so that the granules can be sucked against the opening, but cannot be passed through the through-holes.

However, the invention can be also used for such agricultural implements where an under-pressure, i.e. pressure below an ambient atmospheric pressure, is applied to the low-pressure side P2, and where seeds are allowed to fall using gravity through the metering device 141.

Figs. 3a and 3b illustrate how a combined sealing and clearing wheel 1410 is arranged to engage with the singulating disc 1420, so that clearing protrusions located on the clearing wheel engage with the holes 1421 and so that seals surrounding the clearing protrusions seal around each hole and thus locally break the difference in pressure between the sides P1, P2 of the singulating disc.

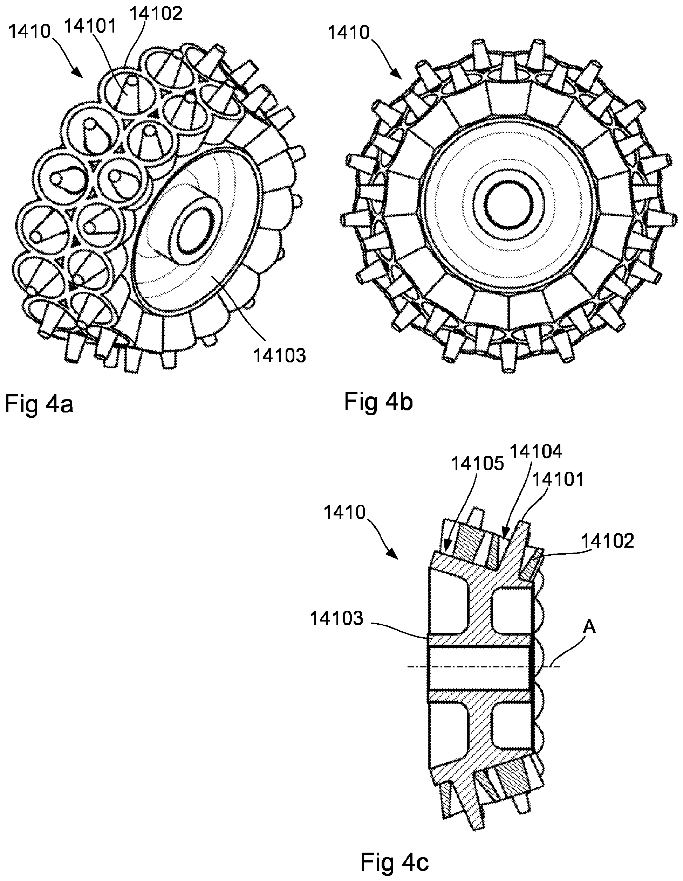

Figs. 4a-4c show in detail a clearing wheel 1410 according to a first embodiment.

The clearing wheel 1410 is designed to rotate about a geometric axis of rotation A and comprises a plurality of clearing protrusions 14101, which are each surrounded by a seal 14102 and a hub 14103. In the example shown, the hub 14103 is designed with a radially outwardly facing surface 14105 which is substantially conical. The clearing protrusions 14101 can extend perpendicularly outward from the outwardly facing surface. Each of the clearing protrusions 14101 can, in an outward direction, for example, perpendicularly, from the outwardly facing surface 14105, have a declining cross-sectional area, the shape of which can coincide with a shape of the holes 1421 in the singulating disc 1420. In the example shown, the clearing protrusions 14101 have a circular cross-sectional area and are substantially conical.

The hub 14103 can be made of a plastic material, a hard rubber material or a metal. The clearing protrusions 14101 can be made of the same material as the hub, or alternatively of another material of the same category, such as plastic, rubber or metal.

In the example shown, the clearing protrusions 14101 are formed in one piece with the hub 14103. Alternatively, the clearing protrusions 14101 can be formed as separate parts, which are fitted to the hub 14103.

The seal 14102 is formed as a container surrounding the clearing protrusion 14101, which has a bottom and a wall surrounding the clearing protrusion with a wall surface inwardly facing the clearing protrusion, wherein an expansion space 14104 is formed between the clearing protrusion 14101 and the wall surface.

Adjacent seals 14102 can be formed in one piece, or alternatively as separate seals. Therefore, the space can, but does not have to, exist between outer surfaces of the walls of adjacent seals. Alternatively, as is shown in Figs. 4a-4c, an outer surface of the wall of a seal can form the wall surface for the adjacent seal.

The seals 14102 can be softer than the material of which the hub and/or the clearing protrusions are made, can be made of a rubber elastic material, such as rubber, thermoplastic elastomer or silicone-based material.

In the example shown in Figs. 3a-5c, the clearing wheel 1410 is formed with two rows of clearing protrusions and is thus adapted to be used together with a singulating disc 1420 which has two concentric rows of through-holes 1421.

It will be appreciated that the clearing wheel can be formed with one or more rows of clearing protrusions and associated seals.

It will further be appreciated that the clearing wheel can be adapted by positioning the clearing protrusions closer together or further apart depending on how the singulating disc 1420 is designed.

In the example shown in Figs. 3a-5c, the clearing wheel 1410 is arranged so that its axis of rotation A forms an acute angle α to a plane in which the singulating disc 1420 rotates. The angle α can be in the range of 5-45 degrees, preferably 10-30 degrees.

It is also possible to arrange the clearing wheel so that this rotates about an axis which is parallel to the plane of the singulating disc 1420. The surface 14105 can then be designed as a substantially cylindrical surface.

In the example shown in Figs. 3a-5c, the clearing wheel 1410 and the singulating disc 1420 can be arranged in a fixed relation to each other, so that a biasing between the singulating disc 1420 and the clearing wheel 1410 is provided only by means of the force with which the seal 14102 is compressed.

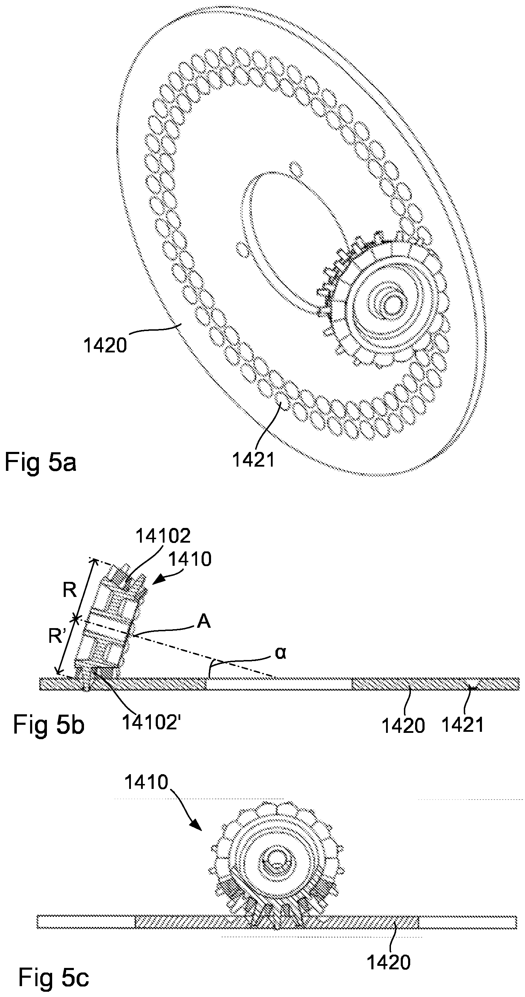

With reference to Fig. 5b, the maximum radius R of the seal 14102 and its radius R' are defined when the seal is compressed.

As shown in Figs. 5a-5c, the seal 14102 can by means of this mounting be compressed radially by approximately 1-20% of a maximum radius R of the seal 14102. Preferably, the compression (R-R') is approximately 1-15% of said radius R, approximately 1-10% or approximately 1-5%. This compression can give rise to a contact force of approximately 0.5-5 N, preferably 1-3 N between the singulating disc 1420 and the clearing wheel 1410.

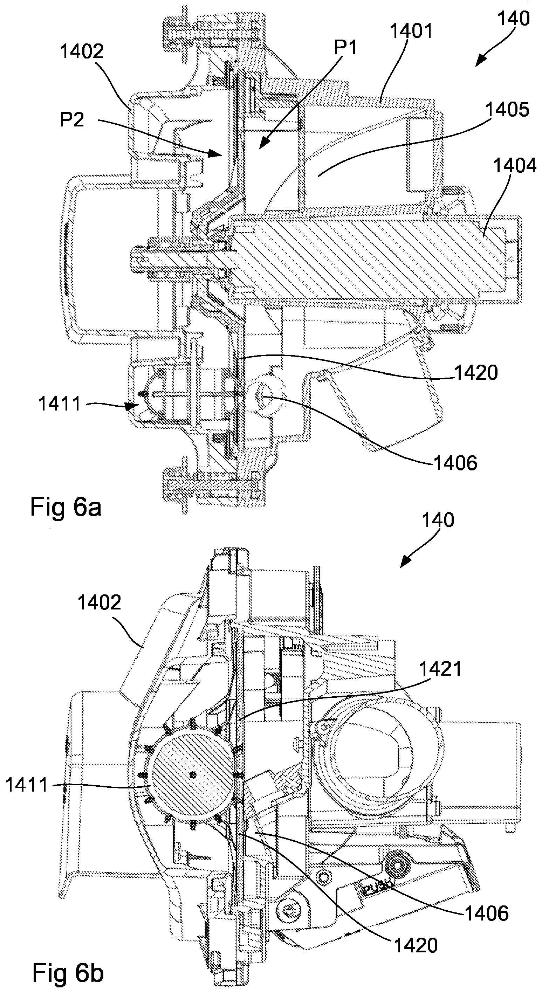

Figs. 6a-6b show a singulator 140 which is constructed according to the same principle as the singulator shown in Figs. 3a-3b, but where another variant of the clearing wheel 1411 is used. For parts which in function are identical to the ones shown in Figs. 3a-3b, the same reference designations are used.

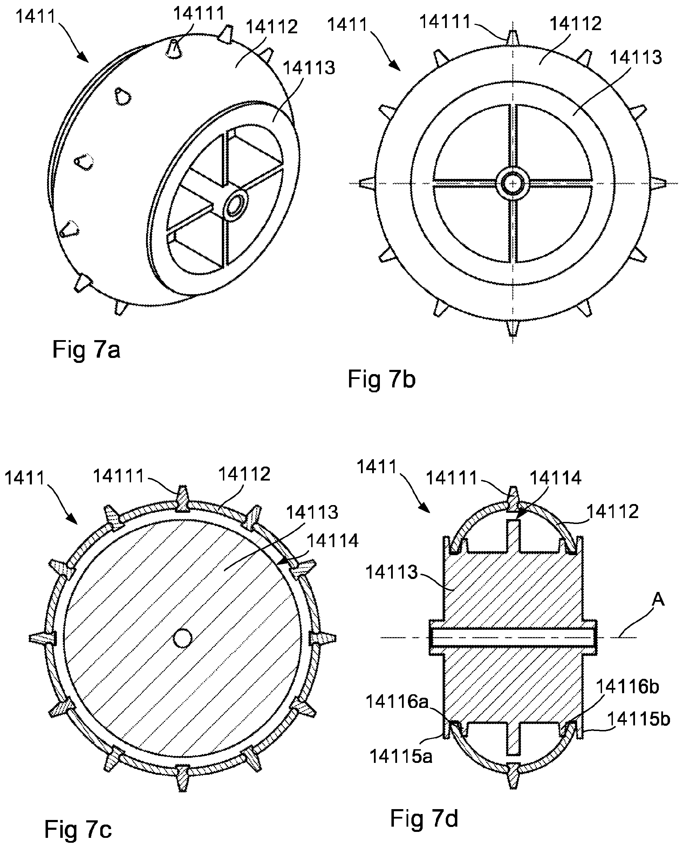

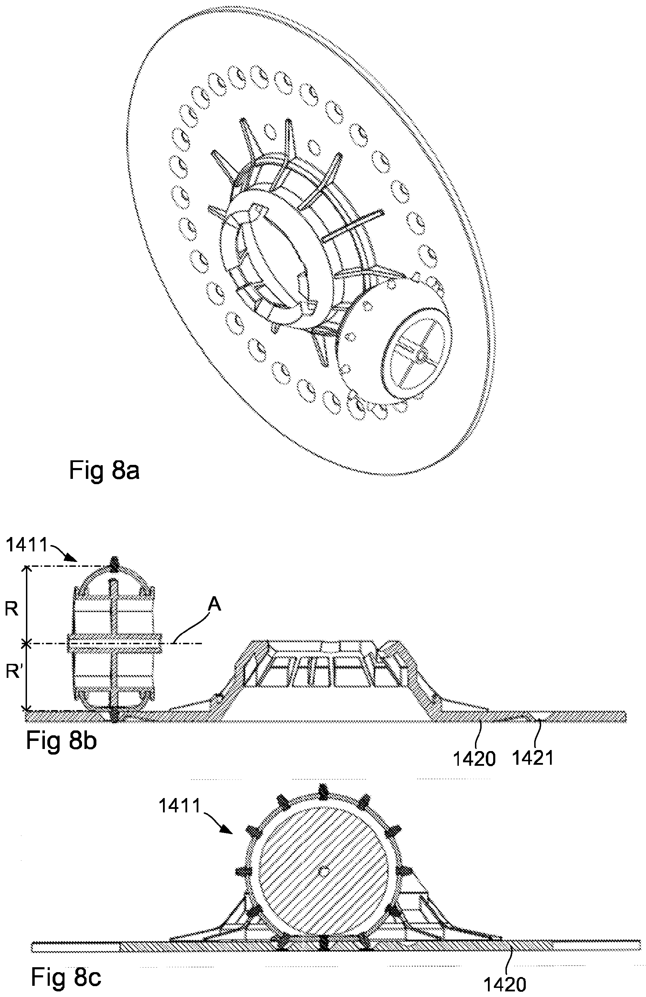

The clearing wheel shown in Figs. 6a-6b is shown in closer detail in Figs. 7a-7d and in Figs. 8a-8c.

This clearing wheel 1411 also comprises a plurality of clearing protrusions 14111, a seal 14112 and a hub 14113.

With reference to Figs. 7a-7d, the clearing wheel 1411 has at least one row of clearing protrusions 14111, which runs around a periphery of the clearing wheel 1411. The clearing protrusions 14111 are arranged on the seal 14112, which is arranged similarly to a tyre around the hub 14113, and is radially moveable together with the seal.

The seal 14112 can be designed as a shell, which, by means of a cross section which is defined by a curve and/or a plurality of straight segments, is radially outwardly substantially convex and radially inwardly open. The shell can have the shape of a rotational body formed by an outwardly substantially convex curve viewed from the axis of rotation.

In the example shown, the seal 14112 is formed as a radially outwardly substantially toroid-shaped shell of rubber elastic material, such as rubber, thermoplastic elastomer or silicone-based material, axial edge portions of which are aligned to the inner sides of the flanges 14115a, 14115b. For example, the toroid shape can be based on a segment of an oval, an ellipse or a circle.

As an additional alternative, the shell can be designed as a part of a sphere.

The hub can have a pair of circumferential outer flanges 14115a, 14115b located at its axial ends, stretching radially outward from the hub.

A pair of inner flanges 14116a, 14116b can possibly be arranged inside the outer flanges, so that each pair of an outer flange and an inner flange 14115a, 14116a, 14115b, 14116b form a radially open and circumferential groove for receiving said axial edge portions of the seal 14112.

Alternatively, such circumferential grooves can be formed in the material body which forms the hub, without flanges.

The clearing protrusions 14111 are mounted on the seal 14112, so that the clearing protrusions 14111 are moveable relative to the hub 14113. A limiting surface 14114 can be arranged radially inside the clearing protrusions 14111, so that this limits how much the clearing protrusions and also the seal can be compressed. The limiting surface can be mounted on, or formed in one piece together with, the hub 14113. The limiting surface can be formed on a flange or ridge extending radially outward from the hub 14113, which can be continuous about the circumference of the hub. Alternatively, the shape of the hub being radially outwardly presented can substantially follow the shape of the inside of the seal 14112, with the exception of a space allowing the seal 14112, where this abuts against the singulating disc 1420, to be compressed radially inward, and thus forming the limiting surface.

Consequently, there is a gap between the limiting surface 14114 and the seal 14112 or the radially inner part of the clearing protrusions 14111 in an unloaded state.

The clearing protrusions 14111 can be formed as separate parts made of, for example, plastic or metal, which are mounted on the seal 14112.

The clearing protrusions 14111 can be mounted on the seal 14112 by means of each of the clearing protrusions being provided with a circumferential groove around the clearing protrusion, which receives a hole edge that defines a hole or a recess in the seal 14112.

Alternatively, or as a complement to, the clearing protrusions 14111 can be mounted on the seal using adhesive, threaded joint or by vulcanization.

With reference to Figs. 8a-8c, in the example shown, the clearing protrusions 14111 are arranged at the greatest diameter of the clearing wheel 1411 and the geometric axis of rotation A of the clearing wheel 1411 is intended to be substantially parallel to the singulating disc 1420 in a mounted state.

Alternatively, the clearing wheel 1411 can be designed to be mounted with its geometric axis of rotation A. For this purpose, the clearing protrusions 14111 can be positioned so that their respective longitudinal direction, upon meshing with the singulating disc 1420, is substantially perpendicular to the singulating disc 1420. The limiting surface 14114 can then be angled proportionally so that this is in parallel to the singulating disc 1420.

As shown in Figs. 8a-8c, the seal 14112 can by means of this mounting be compressed radially by approximately 1-20% of a maximum radius R of the seal 14112. Preferably, the compression (R-R') is approximately 1-15% of said radius R, approximately 1-10% or approximately 1-5%. This compression can give rise to a contact force of approximately 1-3 N between the singulating disc 1420 and the clearing wheel 1411.

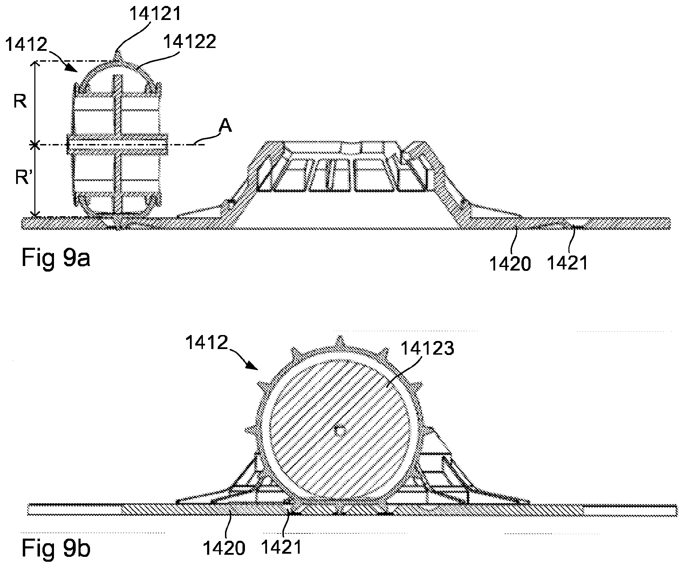

Figs. 9a-9b show an alternative embodiment of the clearing wheel 1412 in Figs. 6a-6b, where the clearing protrusions 14121 are formed in one piece with the seal 14122 and extend substantially radially outward from the seal 14122 at its greatest diameter.

The hub 14123 can be formed according to the description with reference to Figs. 6a-8c.

As shown in Figs. 9a-9b, the seal 14122 can by means of this mounting be compressed radially by approximately 1-20% of a maximum radius R of the seal 14122. Preferably, the compression (R-R') is approximately 1-15% of said radius R, approximately 1-10% or approximately 1-5%. This compression can give rise to a contact force of approximately 1-3 N between the singulating disc 1420 and the clearing wheel 1412.

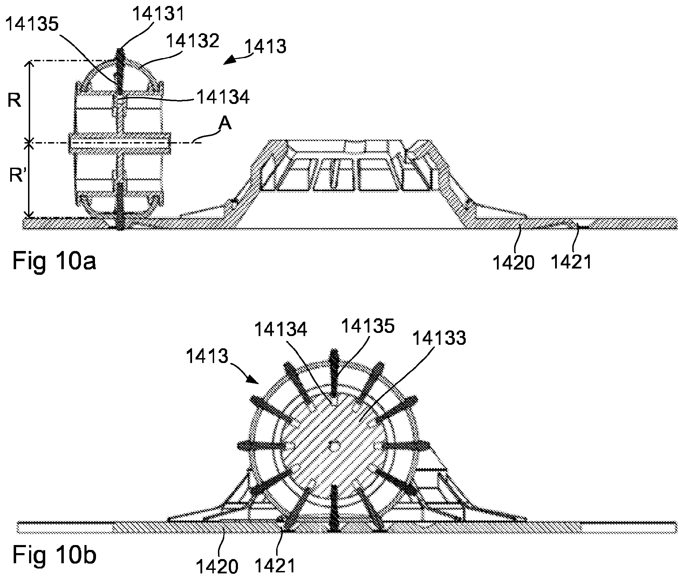

Figs. 10a-10b show an alternative embodiment of the clearing wheel 1413 in Figs. 6a-6b, where the clearing protrusions 14131 and the hub 14133 are modified compared to previous embodiments.

Just like the embodiment described with reference to Figs. 8a-8b, the clearing protrusions are mounted on the seal 14132 and are moveable together with seal 14132.

Figs. 10a-10b show how the clearing protrusions 14131 can be controlled so that each one is moveable along a predetermined direction, which, in the example shown, is parallel to the radius of the hub.

Each of the clearing protrusions 14131 has here been formed with an extended inner portion 14135, which extends down into a blind hole 14134 formed in the hub 14133, so that the inner portion 14135 is moveable relative to the blind hole 14134 only along its axial direction.

Thus, the inner portions 14135 of the clearing protrusions 14131 interact with the blind hole 14134 so that the protrusions 14131, when the seal is compressed, can be displaced radially inward in the hub 14133 for a distance (R-R') limited by the bottom of the blind hole. As a result, tilting of the clearing protrusions 14131 in a plane containing the axis of rotation A of the clearing wheel 1413 and in a plane which is perpendicular to the axis of rotation A is prevented.

The part of the inner portion 14135 interacting with the blind hole 14134 can be formed with a substantially constant cross-sectional shape, just like the blind hole 14134, so that an exact radial control can be provided.

Alternatively, the part of the inner portion 14135 interacting with the blind hole 14134, and/or the blind hole 14134, is formed with a cross-sectional shape shrinking in an inward direction, so that certain tilting between them can be permitted.

As shown in Figs. 10a-10b, the seal 14132 can by means of this mounting be compressed radially by approximately 1-20% of a maximum radius R of the seal 14132. Preferably, the compression (R-R') is approximately 1-15% of said radius R, approximately 1-10% or approximately 1-5%. This compression can give rise to a contact force of approximately 1-3 N between the singulating disc 1420 and the clearing wheel 1413.

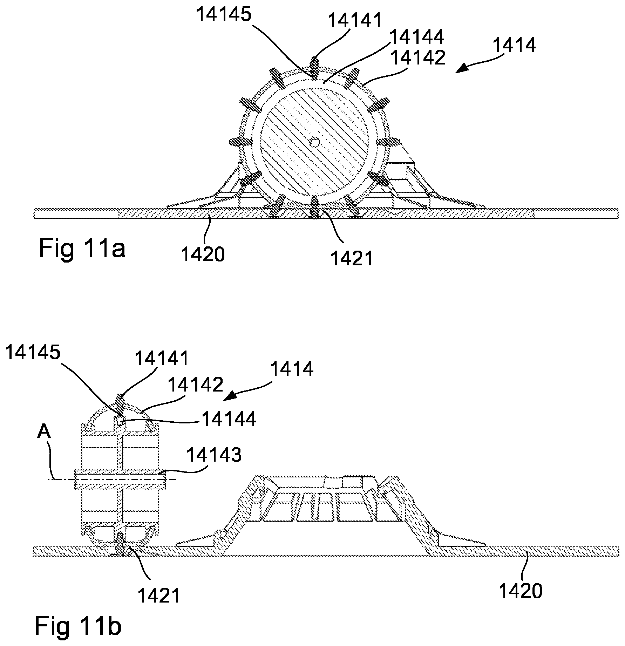

Figs. 11a-11b show a further alternative embodiment of the clearing wheel 1414 in Figs. 6a-6b, where the clearing protrusions 14141 and the hub 14143 are modified compared to previous embodiments.

Just like the embodiment described with reference to Figs. 8a-8b, the clearing protrusions are mounted on the seal 14142 and are moveable together with seal 14142.

Figs. 11a-11b show how the clearing protrusions 14141 can be controlled in a plane which is perpendicular to the axis of rotation A of the clearing wheel, so that each of them are moveable substantially in two directions, which are perpendicular to one another.

In Figs. 11a-11b, the hub 14143 has a centrally located circumferential bottom groove 14144.

Each of the clearing protrusions 14141 has here been formed with an extended inner portion 14145, which extends down into the bottom groove 14144, so that the inner portion 14145 is moveable relative to the bottom groove 14144.

The bottom groove 14144 can thus control the clearing protrusions 14141, so that they can only be tilted in the plane perpendicular to the axis A of the clearing wheel.

The part of the inner portion 14145 which interacts with the bottom groove 14144 can be formed with substantially cylindrical cross section, or with polygonal cross section, wherein the bottom groove 14144 is formed with substantially parallel side walls, so that an exact control of the clearing protrusions in the plane can be provided.

Alternatively, the part of the inner portion 14145 interacting with the bottom groove 14144, and/or the bottom groove 14144, is formed with a radially inward tapered shape, so that certain tilting between them can be permitted.

As shown in Figs. 11a-11b, the seal 14142 can by means of this mounting be compressed radially by approximately 1-20% of a maximum radius R of the seal 14142. Preferably, the compression (R-R') is approximately 1-15% of said radius R, approximately 1-10% or approximately 1-5%. This compression can give rise to a contact force of approximately 1-3 N between the singulating disc 1420 and the clearing wheel 1414.

The concepts shown herein, as non-limiting examples, can be used in a number of different types of seed drills which use a singulator.

As an example, the seed drill can be a precision seed drill of such a type which comprises a plurality of row units, where each row unit has a singulator and its own seed box, in which seed is refilled and from which seed is fed to each singulator for singulating and feeding-out.

As a further example, the seed drill can be a precision seed drill of such a type which comprises a plurality of row units, where each row unit has its own singulator and where the seed drill has at least one central seed box, in which seed is refilled and from which seed is fed to each row unit singulator for singulating and feeding-out.

As a further example, the seed drill can be a precision seed drill of such a type which comprises a plurality of row units and at least one central seed box, where at least one singulator, via a tube or a pipe, supplies one or more row units with singulated seed.

As a further example, the seed drill can be a conventional seed drill with air-assisted feeding of seed from a central seed box to a plurality of seed outlets, which can be formed of furrow-openers, sowing units or row units, via a distributing device, wherein each seed outlet has a singulator associated therewith, which generates a flow of singulated seed. In such seed drills, a cylindrical drum is generally used, which has a plurality of circumferential rows of through-holes, and where a high-pressure side is located on the outside of the drum.

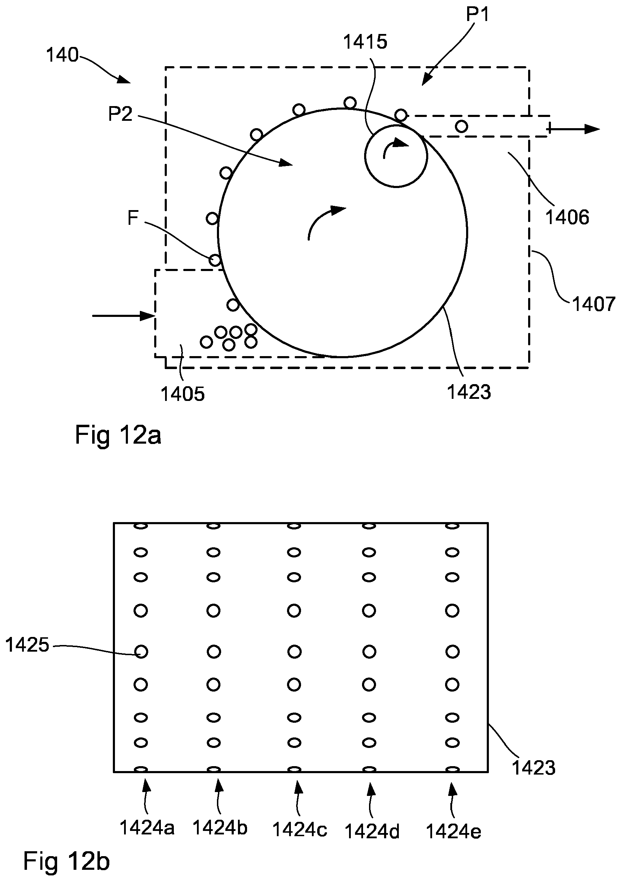

Figs. 12a-12b show a singulator which uses a singulating drum 1423. Fig. 12a shows the singulator viewed in cross section, perpendicular to the axis of rotation of the singulating drum. Fig. 12b shows the singulating drum 1423 viewed in a plan view. This singulator also comprises a casing 1407, a singulator inlet 1405 and a singulator outlet 1406. Air overpressure P1 is generated on the radial outside of the drum, wherein the radial inside of the singulating drum 1423 is ventilated to provide a lower air pressure P2. In alternative embodiments, vacuum can instead be drawn from the radial inside of the singulating drum.

The singulating drum 1423 is formed as a substantially cylindrical shell with a plurality of rows of holes 2424a-2424e (Fig. 12b) spaced axially from each other, extending about the circumference of the singulating drum and each consisting of a plurality of through-holes 1425, which are positioned at a regular mutual distance from each other. The holes can be designed according to the same principles as for singulators which use one singulating disc.

When a difference in pressure P1-P2 is generated across the singulating drum 1423 and this rotates about its axis of rotation, seeds F which are located at the singulator inlet 1405 will be sucked against the holes and transported by the drum to the singulator outlet 1406 where they detach by the action of the clearing wheel 1415.

The clearing wheel 1415 can be rotatable about an axis which is substantially parallel to the axis of rotation of the singulating drum 1423 and be configured to abut the inside of the singulating drum at the singulator outlet 1406 in the same way as described with reference to the embodiments above.

The clearing wheel 1415 can be designed according to the principles described with reference to the clearing wheels 1410, 1411, 1412, 1413, 1414, with the modification that the clearing protrusions and seal are formed to work in a direction perpendicular to the axis of rotation of the clearing wheel.

In the embodiment shown in Figs. 12a-12b, a plurality of clearing wheels 1415 can be arranged on the same axis of rotation.

A singulator with drum as shown in Figs. 12a-12b can be used for supplying two or more row units or seed outlets with flows of singulated seed. One or more such singulators can be positioned on the frame of the agricultural implement and can each be connected via tubes with two or more row units or seed outlets.

Irrespective of the type of seed drill being used, the singulator can be of such a type which feeds using air overpressure, and which preferably uses air overpressure to drive the singulated seed.

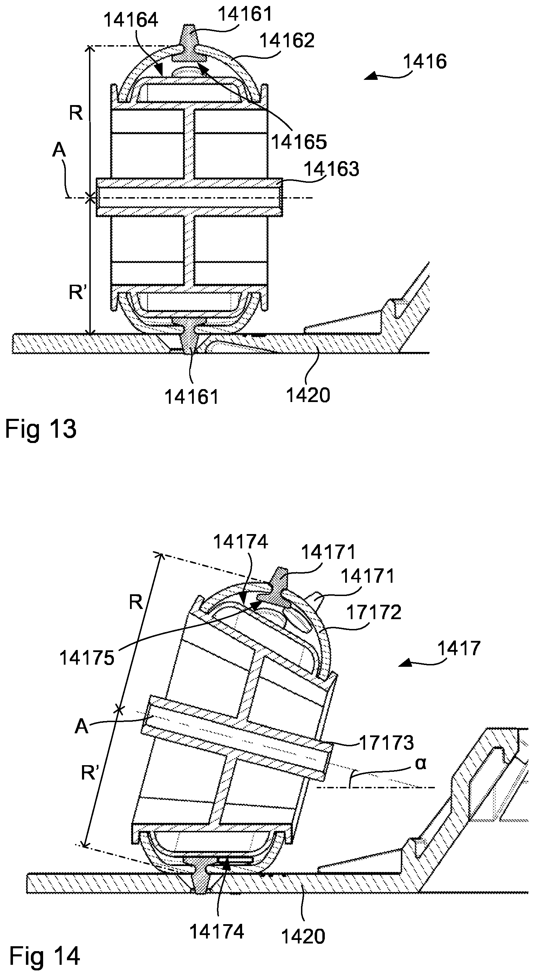

Fig. 13 shows an embodiment of a clearing wheel 1416 where the clearing protrusions 14161 and the hub 14163 are modified compared to previous embodiments, and which in principle correspond to the embodiment described with reference to Figs. 8a-8c, but where the limiting surface 14164 has a greater extension in the axial direction and where the clearing protrusions 14161 are provided with a radially inwardly facing stop surface 14165, which is designed to counteract tilting of the clearing protrusion 14161 when this abuts the limiting surface 14164.

With reference to Fig. 13, in the example shown, the clearing protrusions 14161 are arranged at the greatest diameter of the clearing wheel 1416 and the geometric axis of rotation A of the clearing wheel 1416 is intended to be substantially parallel to the singulating disc 1420 in a mounted state.

As shown in Fig. 13, the seal 14162 can by means of this mounting be compressed radially by approximately 1-20% of a maximum radius R of the seal 14162. Preferably, the compression (R-R') is approximately 1-15% of said radius R, approximately 1-10% or approximately 1-5%. This compression can give rise to a contact force of approximately 1-3 N between the singulating disc 1420 and the clearing wheel 1416.

The limiting surface 14164 can have an axial extension which is 30-90% of the greatest axial extension of the seal, preferably 50-90% or 60-80%.

The stop surface 14165 can have an axial extension which is 110-300% of a visible part of the greatest axial extension of the clearing protrusion 14161, preferably 150-200%. The extension in a tangential direction of the stop surface 14165 can be equal in size to its extension in the axial direction. Alternatively, the extension in the tangential direction can be 50-150% of the extension in the axial direction.

Fig. 14 shows an embodiment of a clearing wheel 1417 where the clearing protrusions 14171, the seal 14172 and the hub 14173 are modified compared to the embodiment in Fig. 13, so that the axis of rotation A of the clearing wheel can be set in an angle to the plane of the singulating disc 1420.

In the example shown in Fig. 14, the clearing wheel 1417 is arranged so that its axis of rotation A forms an acute angle α to a plane in which the singulating disc 1420 rotates. The angle α can be in the range of 5-45 degrees, preferably 10-30 degrees.

Furthermore, the clearing wheel shown in Fig. 14 is provided with two rows of clearing protrusions 14171, which are displaced relative to each other in the axial direction of the clearing wheel, so that they can each engage with a row of through-holes 1421 in the singulating disc 1420.

In Fig. 14, the limiting surface 14174 also has a greater extension in an axial direction and the clearing protrusions 14171 are provided with a radially inwardly facing stop surface 14175, which is designed to counteract tilting of the clearing protrusion 14171 when this abuts the limiting surface 14174.

Thus, the limiting surface 14174 shown in Fig. 14 is angled relative to the axis of rotation, viewed in one plane containing the axis of rotation. The angle of the limiting surface relative to the axis of rotation A substantially corresponds to the angle α in Fig. 14, i.e. the angle of the axis of rotation relative to the plane of the singulating disc 1420.

Just like in Fig. 13, the limiting surface 14174 has an extension in the axial direction which is 30-90% of the greatest axial extension of the seal, preferably 50-90% or 60-80%.

The stop surface 14175 can have an axial extension which is 110-300% of a visible part of the greatest axial extension of the clearing protrusion 14171, preferably 150-200%. The extension in a tangential direction of the stop surface 14175 can be equal in size to its extension in the axial direction. Alternatively, the extension in the tangential direction can be 50-150% of the extension in the axial direction.

As shown in Fig. 14, the seal 14172 can by means of this mounting be compressed radially by approximately 1-20% of a maximum radius R of the seal 14172. Preferably, the compression (R-R') is approximately 1-15% of said radius R, approximately 1-10% or approximately 1-5%. This compression can give rise to a contact force of approximately 1-3 N between the singulating disc 1420 and the clearing wheel 1417.

## Claims

1. Singulating device (140) for singulating granular material, comprising:
a singulating part (1420, 1423), which has a plurality of through-holes (1421, 1425) for receiving single granules from said granular material using a difference in pressure between opposite sides of the singulating part,
a rotatably arranged clearing wheel (1410, 1411, 1412, 1413, 1414, 1415, 1416, 1417), having a plurality of radially protruding clearing protrusions (14101, 14111, 14121, 14131, 14141, 14161, 14171) and a seal surrounding the clearing protrusions (14102, 14112, 14122, 14132, 14142, 14162, 14172),
the clearing protrusions (14101, 14111, 14121, 14131, 14141, 14161, 14171) being arranged at a mutual distance corresponding to a mutual distance between said through-holes (1421, 1425),
the clearing wheel (1410, 1411, 1412, 1413, 1414, 1415, 1416, 1417) comprising a hub (14103, 14113, 14123, 14133, 14143, 14163, 14173) of a first material, and
a seal (14102, 14112, 14122, 14132, 14142, 14162, 14172) being made from a second material, which is softer than the first material,
**characterized in that**
the seal (14102, 14112, 14122, 14132, 14142, 14162, 14172), across a length in a radial direction of the clearing wheel corresponding to approximately 1-20% of a maximum radius (R) of the clearing wheel including the seal, preferably 1-3%, 3-5%, 5-7%, 7-9%, 9-11%, 11-13% or 13-15% of said radius (R), is radially deformable with a spring stiffness corresponding to less than approximately 10 N/mm, preferably less than approximately 7 N/mm.

2. Singulating device according to Claim 1, wherein the seal (14102, 14112, 14122, 14132, 14142, 14162, 14172), viewed in a sectional plane perpendicular to the radial direction, comprises a sealing body which is made from the second material and an expansion space, in which a deformed part of the sealing body is receivable.

3. Singulating device according to Claim 2, wherein the expansion space is surrounded by the sealing body.

4. Singulating device according to any one of the preceding claims, wherein the clearing wheel (1410, 1411, 1412, 1413 ,1414, 1415, 1416, 1417) and the singulating part (1420, 1423) are biased to each other, so that when the seal abuts against the singulating part, it deforms approximately 1-15% of said maximum radius of the clearing wheel including the seal, preferably approximately 1-3%, approximately 3-6%, approximately 6-9%, approximately 9-12% or approximately 12-15%.

5. Singulating device according to any one of the preceding claims, wherein the seal (14102) forms a container surrounding the clearing protrusion (14101), which is radially outwardly open and which has a circumferential wall having an inner surface which faces the clearing protrusion.

6. Singulating device according to any one of the preceding claims, wherein the clearing protrusions are made of the same material as the hub (14103, 14113, 14123, 14133, 14143, 14163, 14173), and preferably made in one piece with the hub (14103).

7. Singulating device according to any one of Claims 1-5, wherein the clearing wheel comprises a gap radially extending between the hub (14113, 14123, 14133, 14143, 14163, 14173) and the seal (14112, 14122, 14132, 14142, 14162, 14172), wherein the radial extension of the gap defines a maximum radial displacement for the clearing protrusion (14111, 14121, 14131, 14141, 14161, 14171).

8. Singulating device according to claim 6, wherein the hub (14113, 14123, 14133, 14143, 14163, 14173) comprises a substantially radially outwardly facing limiting surface (14114, 14124, 14134, 14144, 14164, 14174), radially inside the clearing protrusions (14111, 14121, 14131, 14141), so that a displacement of the clearing protrusions in substantially radial direction is limited by the limiting surface (14114, 14124, 14134, 14144, 14164, 14174).

9. Singulating device according to any one of the preceding claims, wherein the clearing wheel has at least two circumferential rows of clearing protrusions (14101, 14111, 14121, 14131, 14141, 14161, 14171), wherein said rows are displaced relative to each other in an axial direction of the clearing wheel (1410, 1411, 1412, 1413, 1414, 1415, 1416, 1417).

10. Singulating device according to any one of the preceding claims, further comprising:
a casing (1401, 1402), which encloses the singulating part (1420) and the clearing wheel (1410, 1411, 1412, 1413, 1414, 1415, 1416, 1417),
an inlet for the granular material,
an outlet for singulated granular material, and
a pressure source, configured to provide a difference in pressure across the singulating part (1420, 1423).

11. Singulating device according to any one of the preceding claims, wherein the singulating part (1420) is in the form of a singulating disc, which is rotatable about an axis which is perpendicular +/- 40 degrees, preferably +/- 30 degrees or +/- 20 degrees to a geometric axis about which the clearing wheel (1410, 1411, 1412, 1413, 1414, 1416, 1417) is rotatable.

12. Singulating device according to any one of Claims 1-10, wherein the singulating part (1423) is in the form of a singulating drum, which is rotatable about an axis which is parallel +/- 20 degrees, preferably +/- 10 degrees or +/- 1 degree to a geometric axis about which the clearing wheel (1415) is rotatable.

13. Agricultural implement (1) for distribution of granular material to the ground on which the agricultural implement (1) is travelling, comprising a plurality of row units (14a-14k), wherein at least some of the row units have a singulating device (140) according to any one of Claims 1-11, which is configured to supply singulated seed to a row unit associated with the singulating device.

14. Agricultural implement (1) for distribution of granular material to the ground on which the agricultural implement (1) is travelling, comprising a plurality of seed outlets, wherein the agricultural implement has at least one singulating device according to Claim 12, which is configured to supply at least two of the seed outlets with singulated seed.

15. Method of singulating granular material in an agricultural implement (1), comprising:
providing a singulator (140) comprising a singulating part (1420), which has a plurality of through-holes (1421, 1425) for receiving single granules from said granular material,
providing a difference in pressure between opposite sides of the singulating part,
rotating the singulating part through an amount of said granular material, so that said granules are sucked against said through-holes (1421, 1425) and passed from said amount to an outlet,
providing a rotatable clearing wheel (1410, 1411, 1412, 1413, 1414, 1415, 1416, 1417), having a plurality of radially protruding clearing protrusions (14101, 14111, 14121, 14131, 14141) and a seal surrounding the clearing protrusions (14102, 14112, 14122, 14132, 14142, 14162, 14172),
at the outlet, using the clearing wheel (1410, 1411, 1412, 1413, 1414, 1415, 1416, 1417), simultaneously breaking said difference in pressure using the seal and clearing said through-holes (1421, 1425) using the clearing protrusions (14101, 14111, 14121, 14131, 14141), so that granules which are held at said through-holes (1421, 1425) detach and so that any remaining material is removed from said through-holes,
**characterized by**
bringing the seal (14102, 14112, 14122, 14132, 14142, 14162, 14172) to the singulating part with a force of approximately 0.5-10 **N,** preferably approximately 1-7 **N,** and
when said difference in pressure breaks, deforming the seal (14102, 14112, 14122, 14132, 14142, 14162, 14172) radially corresponding to approximately 1-20% of a maximum radius (R) of the clearing wheel (1410, 1411, 1412, 1413, 1414, 1415, 1416, 1417) including the seal, preferably 1-3%, 3-5%, 5-7%, 7-9%, 9-11%, 11-13% or 13-15% of said radius (R).

## Patentansprüche

1. Vereinzelungsvorrichtung (140) zum Vereinzeln von Granulatmaterial, umfassend:
einen Vereinzelungsteil (1420, 1423), der mehrere Durchgangslöcher (1421, 1425) aufweist, zum Aufnehmen einzelner Granulate aus dem Granulatmaterial unter Verwendung eines Druckunterschieds zwischen gegenüberliegenden Seiten des Vereinzelungsteils,
ein drehbar angeordnetes Reinigungsrad (1410, 1411, 1412, 1413, 1414, 1415, 1416, 1417) mit mehreren radial vorstehenden Reinigungsvorsprüngen (14101, 14111, 14121, 14131, 14141, 14161, 14171) und einer Dichtung, die die Reinigungsvorsprünge (14102, 14112, 14122, 14132, 14142, 14162, 14172) umgibt,
wobei die Reinigungsvorsprünge (14101, 14111, 14121, 14131, 14141, 14161, 14171) in einem gegenseitigen Abstand angeordnet sind, der einem gegenseitigen Abstand zwischen den Durchgangslöchern (1421, 1425) entspricht,
wobei das Reinigungsrad (1410, 1411, 1412, 1413, 1414, 1415, 1416, 1417) eine Nabe (14103, 14113, 14123, 14133, 14143, 14163, 14173) aus einem ersten Material umfasst und
wobei die Dichtung (14102, 14112, 14122, 14132, 14142, 14162, 14172) aus einem zweiten Material hergestellt ist, das weicher ist als das erste Material, **dadurch gekennzeichnet, dass**
die Dichtung (14102, 14112, 14122, 14132, 14142, 14162, 14172) über eine Länge in einer radialen Richtung des Reinigungsrades, die etwa 1 bis 20 % eines maximalen Radius (R) des Reinigungsrades einschließlich der Dichtung, vorzugsweise 1 bis 3 %, 3 bis 5 %, 5 bis 7 %, 7 bis 9 %, 9 bis 11 %, 11 bis 13 % oder 13 bis 15 % des Radius (R), entspricht, radial verformbar ist mit einer Federsteifigkeit, die weniger als etwa 10 N/mm, vorzugsweise weniger als etwa 7 N/mm, entspricht.

2. Vereinzelungsvorrichtung nach Anspruch 1, wobei die Dichtung (14102, 14112, 14122, 14132, 14142, 14162, 14172), in einer zu der radialen Richtung senkrechten Schnittebene betrachtet, einen Dichtungskörper, der aus dem zweiten Material hergestellt ist, und einen Expansionsraum, in dem ein verformter Teil des Dichtungskörpers aufnehmbar ist, umfasst.

3. Vereinzelungsvorrichtung nach Anspruch 2, wobei der Expansionsraum von dem Dichtungskörper umgeben ist.

4. Vereinzelungsvorrichtung nach einem der vorhergehenden Ansprüche, wobei das Reinigungsrad (1410, 1411, 1412, 1413 ,1414, 1415, 1416, 1417) und der Vereinzelungsteil (1420, 1423) zueinander vorgespannt sind, so dass sich die Dichtung, wenn sie an dem Vereinzelungsteil anliegt, um etwa 1 bis 15 % des maximalen Radius des Reinigungsrades einschließlich der Dichtung, vorzugsweise um etwa 1 bis 3 %, etwa 3 bis 6 %, etwa 6 bis 9 %, etwa 9 bis 12 % oder etwa 12 bis 15 %, verformt.

5. Vereinzelungsvorrichtung nach einem der vorhergehenden Ansprüche, wobei die Dichtung (14102) einen Behälter bildet, der den Reinigungsvorsprung (14101) umgibt, der radial nach außen offen ist und eine Umfangswand mit einer Innenfläche aufweist, die dem Reinigungsvorsprung zugewandt ist.

6. Vereinzelungsvorrichtung nach einem der vorhergehenden Ansprüche, wobei die Reinigungsvorsprünge aus dem gleichen Material wie die Nabe (14103, 14113, 14123, 14133, 14143, 14163, 14173) hergestellt sind und vorzugsweise einstückig mit der Nabe (14103) hergestellt sind.

7. Vereinzelungsvorrichtung nach einem der Ansprüche 1-5, wobei das Reinigungsrad einen Spalt umfasst, der sich radial zwischen der Nabe (14113, 14123, 14133, 14143, 14163, 14173) und der Dichtung (14112, 14122, 14132, 14142, 14162, 14172) erstreckt, wobei die radiale Erstreckung des Spalts eine maximale radiale Verschiebung für den Reinigungsvorsprung (14111, 14121, 14131, 14141, 14161, 14171) definiert.

8. Vereinzelungsvorrichtung nach Anspruch 6, wobei die Nabe (14113, 14123, 14133, 14143, 14163, 14173) eine im Wesentlichen radial nach außen gewandte Begrenzungsfläche (14114, 14124, 14134, 14144, 14164, 14174), die radial im Inneren der Reinigungsvorsprünge (14111, 14121, 14131, 14141), umfasst, so dass eine Verschiebung der Reinigungsvorsprünge in im Wesentlichen radialer Richtung durch die Begrenzungsfläche (14114, 14124, 14134, 14144, 14164, 14174) begrenzt ist.

9. Vereinzelungsvorrichtung nach einem der vorhergehenden Ansprüche, wobei das Reinigungsrad mindestens zwei umlaufende Reihen von Reinigungsvorsprüngen (14101, 14111, 14121, 14131, 14141, 14161, 14171) aufweist, wobei die Reihen relativ zueinander in einer axialen Richtung des Reinigungsrades (1410, 1411, 1412, 1413, 1414, 1415, 1416, 1417) verschoben sind.

10. Vereinzelungsvorrichtung nach einem der vorhergehenden Ansprüche, ferner umfassend:
ein Gehäuse (1401, 1402), das den Vereinzelungsteil (1420) und das Reinigungsrad (1410, 1411, 1412, 1413, 1414, 1415, 1416, 1417) umschließt,
einen Einlass für das Granulatmaterial,
einen Auslass für vereinzeltes Granulatmaterial, und
eine Druckquelle, die eingerichtet ist, um einen Druckunterschied über dem Vereinzelungsteil (1420, 1423) bereitzustellen.

11. Vereinzelungsvorrichtung nach einem der vorhergehenden Ansprüche, wobei der Vereinzelungsteil (1420) in Form einer Vereinzelungscheibe vorliegt, die um eine Achse drehbar ist, die senkrecht +/- 40 Grad, vorzugsweise +/- 30 Grad oder +/- 20 Grad zu einer geometrischen Achse steht, um die das Reinigungsrad (1410, 1411, 1412, 1413, 1414, 1416, 1417) drehbar ist.

12. Vereinzelungsvorrichtung nach einem der Ansprüche 1-10, wobei der Vereinzelungsteil (1423) in Form einer Vereinzelungstrommel vorliegt, die um eine Achse drehbar ist, die parallel +/- 20 Grad, vorzugsweise +/- 10 Grad oder +/- 1 Grad zu einer geometrischen Achse steht, um die das Reinigungsrad (1415) drehbar ist.

13. Landwirtschaftliches Gerät (1) zum Verteilen von Granulatmaterial auf den Boden, auf dem das landwirtschaftliche Gerät (1) fährt, umfassend mehrere Reiheneinheiten (14a-14k), wobei zumindest einige der Reiheneinheiten eine Vereinzelungsvorrichtung (140) nach einem der Ansprüche 1-11 aufweisen, die eingerichtet sind, um vereinzeltes Saatgut an eine Reiheneinheit zu liefern, die mit der Vereinzelungsvorrichtung verbunden ist.

14. Landwirtschaftliches Gerät (1) zum Verteilen von Granulatmaterial auf den Boden, auf dem das landwirtschaftliche Gerät (1) fährt, umfassend mehrere Saatgutausläusse, wobei das landwirtschaftliche Gerät mindestens eine Vereinzelungsvorrichtung nach Anspruch 12 aufweist, die eingerichtet ist, um an mindestens zwei der Saatgutauslässe vereinzeltes Saatgut zu liefern.

15. Verfahren zum Vereinzeln von Granulatmaterial in einem landwirtschaftlichen Gerät (1), umfassend:
Bereitstellen eines Vereinzelers (140), der einen Vereinzelungsteil (1420) umfasst, der mehrere Durchgangslöcher (1421, 1425) zum Aufnehmen einzelner Granulate aus dem Granulatmaterial aufweist,
Bereitstellen eines Druckunterschieds zwischen gegenüberliegenden Seiten des Vereinzelungsteils,
Drehen des Vereinzelungsteils durch eine Menge des Granulatmaterials, so dass die Granulate gegen die Durchgangslöcher (1421, 1425) gesaugt und von der Menge zu einem Auslass weitergeleitet werden,
Bereitstellen eines drehbaren Reinigungsrades (1410, 1411, 1412, 1413, 1414, 1415, 1416, 1417) mit mehreren radial vorstehenden Reinigungsvorsprüngen (14101, 14111, 14121, 14131, 14141) und einer Dichtung, die die Reinigungsvorsprünge (14102, 14112, 14122, 14132, 14142, 14162, 14172) umgibt,
an dem Auslass, unter Verwendung des Reinigungsrades (1410, 1411, 1412, 1413, 1414, 1415, 1416, 1417), gleichzeitiges Aufheben des Druckunterschieds unter Verwendung der Dichtung und Reinigen der Durchgangslöcher (1421, 1425) unter Verwendung der Reinigungsvorsprünge (14101, 14111, 14121, 14131, 14141), so dass sich die Granulate, die an den Durchgangslöchern (1421, 1425) hängen bleiben, lösen und so dass jegliches verbleibende Material aus den Durchgangslöchern entfernt wird,
**gekennzeichnet durch**
Aufbringen der Dichtung (14102, 14112, 14122, 14132, 14142, 14162, 14172) auf den Vereinzelungsteil mit einer Kraft von etwa 0,5 bis 10 **N,** vorzugsweise etwa 1 bis 7 **N,** und
wenn der Druckunterschied aufgehoben wird, Verformen der Dichtung (14102, 14112, 14122, 14132, 14142, 14162, 14172) radial entsprechend etwa 1 bis 20 % eines maximalen Radius (R) des Reinigungsrades (1410, 1411, 1412, 1413, 1414, 1415, 1416, 1417) einschließlich der Dichtung, vorzugsweise 1 bis 3 %, 3 bis 5 %, 5 bis 7 %, 7 bis 9 %, 9 bis 11 %, 11 bis 13 % oder 13 bis 15 % des Radius (R).

## Revendications

1. Dispositif d'individualisation (140) pour l'individualisation de matériau granulaire, comprenant :
une partie d'individualisation (1420, 1423), qui a une pluralité de trous traversants (1421, 1425) pour recevoir des granulés individuels dudit matériau granulaire en utilisant une différence de pression entre les côtés opposés de la partie d'individualisation,
une roue de dégagement disposée de manière à pouvoir tourner (1410, 1411, 1412, 1413, 1414, 1415, 1416, 1417), présentant une pluralité de saillies de dégagement (14101, 14111, 14121, 14131, 14141, 14161, 14171) et un joint entourant les saillies de dégagement (14102, 14112, 14122, 14132, 14142, 14162, 14172),
les saillies de dégagement (14101, 14111, 14121, 14131, 14141, 14161, 14171) étant disposés à une distance mutuelle correspondant à une distance mutuelle entre lesdits trous traversants (1421, 1425),
la roue de dégagement(1410, 1411, 1412, 1413, 1414, 1415, 1416, 1417) comprenant un moyeu (14103, 14113, 14123, 14133, 14143, 14163, 14173) fait d'un premier matériau, et
un joint (14102, 14112, 14122, 14132, 14142, 14162, 14172) étant constitué d'un second matériau, qui est plus tendre que le premier matériau,
**caractérisé en ce que**
le joint (14102, 14112, 14122, 14132, 14142, 14162, 14172), sur une longueur dans une direction radiale de la roue de dégagement correspondant à environ 1 à 20 % d'un rayon maximal (R) de la roue de dégagement comprenant le joint, de préférence 1 à 3 %, 3 à 5 %, 5 à 7 %, 7 à 9 %, 9 à 11 %, 11 à 13 % ou 13 à 15 % dudit rayon (R), est déformable radialement avec une raideur de ressort inférieure à environ 10 N/mm, de préférence inférieure à environ 7 N/mm.

2. Dispositif d'individualisation selon la revendication 1, dans lequel le joint (14102, 14112, 14122, 14132, 14142, 14162, 14172), vu dans un plan de coupe perpendiculaire à la direction radiale, comprend un corps d'étanchéité qui est constitué du second matériau et un espace d'expansion dans lequel une partie déformée du corps d'étanchéité peut être reçue.

3. Dispositif d'individualisation selon la revendication 2, dans lequel l'espace d'expansion est entouré par le corps d'étanchéité.

4. Dispositif d'individualisation selon l'une quelconque des revendications précédentes, dans lequel la roue de dégagement (1410, 1411, 1412, 1413, 1414, 1415, 1416, 1417) et la partie d'individualisation (1420, 1423) sont inclinées l'une par rapport à l'autre de sorte que, lorsque le joint vient buter contre la partie d'individualisation, il déforme environ 1 à 15 % dudit rayon maximal de la roue de dégagement comprenant le joint, de préférence environ 1 à 3 %, environ 3 à 6 %, environ 6 à 9 %, environ 9 à 12 % ou environ 12 à 15 %.

5. Dispositif d'individualisation selon l'une quelconque des revendications précédentes, dans lequel le joint (14102) forme un récipient entourant la saillie de dégagement (14101) et qui est ouvert radialement vers l'extérieur et qui présente une paroi circonférentielle ayant une surface intérieure tournée vers la saillie de dégagement.

6. Dispositif d'individualisation selon l'une quelconque des revendications précédentes,
dans lequel les saillies de dégagement sont faites du même matériau que le moyeu (14103, 14113, 14123, 14133, 14143, 14163, 14173), et forment de préférence une seule pièce avec le moyeu (14103).

7. Dispositif d'individualisation selon l'une quelconque des revendications 1 à 5, dans lequel la roue de dégagement comprend un espace s'étendant radialement entre le moyeu (14113, 14123, 14133, 14143, 14163, 14173) et le joint (14112, 14122, 14132, 14142, 14162, 14172), l'extension radiale de l'espace définissant un déplacement radial maximal pour la saillie de dégagement (14111, 14121, 14131, 14141, 14161, 14171).

8. Dispositif d'individualisation selon la revendication 6, dans lequel le moyeu (14113, 14123, 14133, 14143, 14163, 14173) comprend une surface de limitation (14114, 14124, 14134, 14144, 14164, 14174) sensiblement tournée radialement vers l'extérieur, radialement à l'intérieur des saillies de dégagement (14111, 14121, 14131, 14141), de sorte qu'un déplacement des saillies de dégagement dans la direction sensiblement radiale est limité par la surface de limitation (14114, 14124, 14134, 14144, 14164, 14174).

9. Dispositif d'individualisation selon l'une quelconque des revendications précédentes, dans lequel la roue de dégagement présente au moins deux rangées circonférentielles de saillies de dégagement(14101, 14111, 14121, 14131, 14141, 14161, 14171), lesdites rangées sont déplacées les unes par rapport aux autres dans une direction axiale de la roue de dégagement (1410, 1411, 1412, 1413, 1414, 1415, 1416, 1417).

10. Dispositif d'individualisation selon l'une quelconque des revendications précédentes, comprenant en outre :
un boîtier (1401, 1402), qui renferme la partie d'individualisation (1420) et la roue de dégagement(1410, 1411, 1412, 1413, 1414, 1415, 1416, 1417),
une entrée pour le matériau granulaire,
une sortie pour matériau granulaire individualisé, et
une source de pression configurée pour créer une différence de pression à travers la partie d'individualisation (1420, 1423).

11. Dispositif d'individualisation selon l'une quelconque des revendications précédentes, dans lequel la partie d'individualisation (1420) se présente sous la forme d'un disque d'individualisation, qui peut tourner autour d'un axe perpendiculaire à +/- 40 degrés, de préférence à +/- 30 degrés ou +/- 20 degrés par rapport à un axe géométrique autour duquel la roue de dégagement (1410, 1411, 1412, 1413, 1414, 1416, 1417) peut tourner.

12. Dispositif d'individualisation selon l'une quelconque des revendications 1 à 10, dans lequel la partie d'individualisation (1423) se présente sous la forme d'un tambour d'individualisation et peut tourner autour d'un axe qui est parallèle de +/- 20 degrés, de préférence +/- 10 degrés ou +/- 1 degré par rapport à un axe géométrique autour duquel la roue de dégagement (1415) peut tourner.

13. Outil agricole (1) pour la distribution de granulés sur le sol sur lequel l'outil agricole (1) se déplace, comprenant une pluralité d'unités de rangs (14a-14k), au moins certaines des unités de rang comportant un dispositif d'individualisation (140) selon l'une quelconque des revendications 1-11, qui est configuré pour fournir des semences séparées à une unité de rang associée au dispositif d'individualisation.

14. Outil agricole (1) pour la distribution de granulés sur le sol sur lequel l'outil agricole (1) se déplace, comprenant une pluralité de sorties de semences, l'outil agricole comportant au moins un dispositif d'individualisation selon la revendication 12, qui est configuré pour alimenter au moins deux des sorties de semences avec des semences individualisées.

15. Procédé d'individualisation de matériaux granulaires dans un outil agricole (1), comprenant :
la prévision d'un dispositif d'individualisation (140) comprenant une partie d'individualisation (1420), qui comporte une pluralité de trous traversants (1421, 1425) pour recevoir des granulés individuels provenant dudit matériau granulaire,
la création d'une différence de pression entre les côtés opposés de la partie d'individualisation,
la rotation de la partie d'individualisation sur une certaine quantité dudit matériau, de sorte que lesdits granulés soient aspirés contre lesdits trous traversants (1421, 1425) et transférés de ladite quantité à une sortie,
la prévision d'une roue de dégagement rotative (1410, 1411, 1412, 1413, 1414, 1415, 1416, 1417), ayant une pluralité de saillies de dégagement (14101, 14111, 14121, 14131, 14141) faisant saillie radialement et d'un joint entourant les saillies de dégagement (14102, 14112, 14122, 14132, 14142, 14162, 14172),
à la sortie, à l'aide de la roue de dégagement(1410, 1411, 1412, 1413, 1414, 1415, 1416, 1417), l'interruption simultanée de ladite différence de pression en utilisant le joint et en dégageant lesdits trous traversants (1421, 1425) à l'aide des saillies de dégagement (14101, 14111, 14121, 14131, 14141), de sorte que les granulés qui sont maintenus au niveau desdits trous traversants (1421, 1425) se détachent et que tout matériau restant soit enlevé desdits trous traversants,
**caractérisé par**
l'apport du joint (14102, 14112, 14122, 14132, 14142, 14162, 14172) vers la partie d'individualisation avec une force d'environ 0,5 à 10 N, de préférence d'environ 1 à 7 N et,
lorsque ladite différence de pression est interrompue, la déformation du joint (14102, 14112, 14122, 14132, 14142, 14162, 14172) correspondant radialement à environ 1 à 20 % du rayon maximal (R) de la roue de dégagement(1410, 1411, 1412, 1413, 1414, 1415, 1416, 1417) comprenant le joint, de préférence 1 à 3 %, 3 à 5 %, 5 à 7 %, 7 à 9 %, 9 à 11 %, 11 à 13 % ou 13 à 15 % dudit rayon (R).
